# EUROPEAN PATENT SPECIFICATION

(11) **EP 4 214 674 B1**
(45) Date of publication and mention of the grant of the patent: **25.03.2026**
(21) Application number: 21867994.2
(22) Date of filing: 17.09.2021
(51) Int. Cl.: G06T 7/00, B23K 37/00, G01N 23/04, G01N 29/06, G06Q 10/06, G06Q 10/20, G06N 3/09, G06N 3/0464, G06N 3/08, G06N 20/00

(54) **SYSTEM FOR PERFORMING COMPUTER-ASSISTED IMAGE ANALYSIS OF WELDS AND RELATED METHODS**
SYSTEM ZUR DURCHFÜHRUNG EINER COMPUTERGESTÜTZTEN BILDANALYSE VON SCHWEISSNÄHTEN UND ZUGEHÖRIGE VERFAHREN
SYSTÈME D'ANALYSE D'IMAGE ASSISTÉE PAR ORDINATEUR POUR L'ANALYSE DE SOUDURES, ET PROCÉDÉS ASSOCIÉS

(30) Priority: 18.09.2020 US 202063080064 P
(43) Date of publication of application: 26.07.2023
(73) Proprietor: SPS Management, LLC, Broken Arrow OK 74012 (US)
(72) Inventor: MCDONALD, Donald F., Spring Drive Tomball, Texas 77377 (US); SIMMONS, Michael James, Houston, Texas 77005 (US); GIBB, Dean, Ajax, Ontario L1T 2Y8 (CA)
(74) Representative: D Young & Co LLP
(86) International application number: PCT/CA2021/051301
(87) International publication number: WO 2022/056640

(56) References cited:
- WO-A1-2016/153562
- CN-A- 101 556 598
- CN-A- 111 539 923
- US-A1- 2016 223 477
- US-A1- 2016 267 806
- US-A1- 2017 032 281
- US-B1- 6 414 261
- PANYA NIPHAPORN ET AL: "Creating Subsurface Defect Specimens for Deep Learning Analyzing of Radiographic Weld Testing", 2019 RESEARCH, INVENTION, AND INNOVATION CONGRESS (RI2C), IEEE, 11 December 2019 (2019-12-11), pages 1 - 6, XP033720120, DOI: 10.1109/RI2C48728.2019.8999893

## Description

### Related Application Data

This application claims priority to, and the benefit of, provisional U.S. patent application no. 63/080,064, filed September 18, 2020.

### Technical Field

The present invention is related to non-destructive testing, and more particularly to a system for performing computer-assisted image analysis of welds and related methods.

### Background

Radiographic and ultrasonic weld inspection are the two most common methods of non-destructive testing (NDT) used to detect discontinuities within the internal structure of welds. Although regulatory requirements for the inspect of welds vary between jurisdictions, most if not all jurisdictions require pipeline weld inspections and specify the requirements for a conforming weld as well as who may inspect welds, and how welds are inspected. Weld inspection techniques typically rely on onsite weld inspectors which are costly and produce results that are error prone as a result of the application of professional skill and judgment. For at least this reason, there remains a need for an improved system for performing image analysis of welds.

Chinese Patent Publication No. CN 111 539 923 A discloses a digital ray detection method, system and server for detecting weld defects that includes the acquisition, conversion and storage of weld images, followed by image labeling and comparison, identification of weld defects, weld defect positioning on respective images, and generation of a quality report. A two-step process of determining weld image quality before detecting weld defects is not disclosed, taught or suggested.

Chinese Patent Publication No. CN 101 556 598 A discloses a radiographic detection welding seam image management system and a method of evaluating welding quality by using a computer. A two-step process of determining weld image quality before evaluating welding quality is not disclosed, taught or suggested.

US Patent Publication No. US 2016/267806 A1 discloses a method and weld training system to provide visual information associated with welding operations. The weld training system includes a display, a camera, a communications device, and welding equipment including a welding helmet having a view port. The communications device communicates with welding equipment. When the welding helmet is worn by a wearer, the display is viewable by the wearer, and the camera has a view through the view port such that the display displays to the wearer images taken by the camera through the view port and displays a simulated object generated based on information received from the welding equipment via the communications device. Neither a method of evaluating welding quality by using a computer nor a method of determining weld image quality is disclosed, taught or suggested.

US Patent Publication No. US 2017/032281 A1 discloses a weld production knowledge system for processing welding data collected from one of a plurality of welding systems situated at one or more physical locations. The system receives from the plurality of welding systems welding data associated with welds . The system comprises an analytics computing platform and a weld data store that employs a dataset comprising welding process data associated with the one or more physical locations, and/or weld quality data associated with the one or more physical locations. The analytics computing platform employs a weld production knowledge machine learning algorithm to analyze the welding data vis-à-vis the weld data store to identify a defect in the weld. A two-step process of determining weld image quality before evaluating welding quality is not disclosed, taught or suggested.

Publication "Creating Subsurface Defect Specimens for Deep Learning Analyzing of Radiographic Weld Testing" by Panya Niphaporn et al., 2019 Research, Invention, And Innovation Congress (RI2C), IEEE, 11 December 2019 (2019-12-11), pages 1-6, XP033720120, discloses a method of creating defect specimens for the development of a deep learning model for non-destructive inspection of welding materials of the workpiece by radiographic testing. Neither a method of evaluating welding quality by using a computer nor a method of determining weld image quality is disclosed, taught or suggested.

WO Patent Publication No. WO 2016/153562 A1 discloses a field system and methods that can be deployed in the application of pipe welding. The field system may include non-destructive testing systems and methods that may be used to detect weld defects. A two-step process of determining weld image quality before evaluating welding quality is not disclosed, taught or suggested.

Although systems and methods of evaluating welding quality by using a computer are described in the above, these solutions fail to address problems associated with poor weld image quality. Therefore, for at least this reasons, there remains a need for improved systems and methods for performing image analysis of welds.

### Brief Description of the Drawings

FIG. 1 is a schematic diagram of a communication system in accordance with one example embodiment of the present invention.
FIG. 2 is a block diagram of a computing device suitable for use as a computer terminal in the communication system of FIG. 1.
FIG. 3 is a block diagram of a server for use in the weld analytics system in accordance with one example embodiment of the present invention.
FIG. 4 is a flowchart of a computer-assisted method of performing image analysis of a weld in accordance with an example embodiment of the present invention.
FIG. 5 is a flowchart of a computer-assisted workflow for generating job orders for non-conforming images in accordance with an example embodiment of the present invention.

### Summary

The present invention provides a system for performing computer-assisted image analysis of welds and related methods. The system and method automate weld inspection so as to allow remote weld inspection to be performed at least in part by a weld analytics system which may be trained by artificial intelligence (AI) or machine learning (ML), and which may comprise an AI-based processor system. The system and method obviate the need for licensed inspectors at the worksite, eliminates the application of professional skill and judgment of humans which is error prone, and eliminates the possibility that improper influence on inspectors may affect weld inspections. A multistage analysis of the weld images may be performed that leverages the computing power and resources of more powerful remote computing devices only as needed, and otherwise relies on less powerful computing devices in the field. For example, an image quality check and a quick weld quality check may be performed by computing devices in the field, and a more thorough check of the weld may be performed by more powerful remote computing devices only when the image quality check and the quick weld quality check exceed respective quality thresholds or standards. This is believed to result in a more efficient use of computing resources, faster inspection times, and faster and more efficient operations and scheduling with respect to pipeline inspection and construction. Due to the nature of pipeline construction, confidence/trust, speed and accuracy of the weld inspection system are important factors. The multistage analysis described herein is believed to provide the confidence/trust, speed and accuracy of the weld inspection system desired of a fully or partially automatic system intended to be used in the place of system based entirely on human inspectors. The system and method also provide the ability to automatically generate notifications and alerts in response to the detection of non-conforming welds, and for the remote access and viewing of weld inspection data in response to the detection of non-conforming welds or other reasons.

The system and method of the present invention may be used to streamline pipeline construction and asset integrity imaging projects and reduce overall costs while increasing efficiency. The system and method of the present invention provides digital images enabling remote auditing capabilities, provides a safer working environment and allows simultaneous operations onsite for new pipeline construction or asset integrity imaging. The system and method of the present invention may replace traditional NDT methods, such as screen-film radiography, by using ultrasonic (US), computed radiography (CR) or digital radiography (DR) imaging system, which may be configured to be fully portable, allowing deployment to almost any location. Depending on the project, high definition real-time imaging may be provided by the imaging system. The systems and methods of the present invention may be used to provide an imaging system tailored to conform to the requirements of pipeline construction and asset integrity imaging projects including challenging ROW (Right of Way) projects, gas plants, power plants, projects located on the ground or elevated hundreds of feet in the air.

The imaging systems used in the present invention may have a highly stable software and component design allowing use in harsh environments, may have a modular design which allows for fast repair, maintenance and adaptability in the field, may provide an ease of use and portability allowing use in high production environments, may require a reduced number of personnel for operation of equipment, may provide faster and improved feedback to improve the control of welding process, may provide the capability to inspect welds almost immediately post-weld, and may be used to inspect root pass, repair excavations, transitions and varied pipe wall thicknesses in one scan among other advantages.

The imaging systems used in the present invention may be ultrasonic imaging, digital radiography or computed radiography imaging systems that provide mobile, substantially faster, and provide higher resolution and higher quality images compared with screen-film radiography. The ultrasonic, digital radiography or computed radiography imaging systems used in the present invention may be carried by hand or mounted on a mobile or static platform, increasing the flexibility and adaptability of the system. For example, ultrasonic, digital radiography or computed radiography imaging systems used in the present invention may be utilized with internal pipeline crawlers. Furthermore, ultrasonic, digital radiography or computed radiography imaging systems used in the present invention may have higher collimation and generate less radiation than alternatives, thereby requiring smaller shielding barrier distances and significantly reduced doses and risk to personnel. The reduced radiation footprint allows for simultaneous operations onsite and reduced downtime. Furthermore, with the ultrasonic imaging systems used in the present invention external equipment may be e-stopped unlike conventional crawlers, there may be no requirement of gamma sources for exposure or no requirement for gamma tracing on internal equipment.

High definition (HD) real-time imaging such as high definition real-time radiography (HDRTR) may be provided by the system, depending on the project. HDRTR uses a custom designed digital detector to acquire high quality images which are interpreted using proprietary software. The acquisition of images is real-time or near real-time with little or no processing time, allowing interpretation during exposure. HDRTR systems may be available in several configurations using Single Wall Single Image and Double Wall Single Image (SWSI and DWSI) to suit a wide variety of pipe configurations between 2"-60". HDRTR may provide significant time savings over alternatives and provide superior real-time radiography image quality not just in comparison to film but also to other DR systems.

The system and method of the present invention also provides an electronic digital ticketing system and custom analysis reporting instead of a daily paper ticketing which only allow for "yes" or "no" reporting for a specific day, are typically completed by hand resulting in specific details being sometimes illegible, are easily lost or misplaced over time, and require manual data entry for any reporting requirements, rendering such report both time consuming and subject to entry error. The system and methods may be used to generate productivity reports specifying weld pass/fail rates, operational processes, GNSS/GPS coordinates, project cost tracking and more. The electronic digital tickets are generated by an electronic digital ticketing system and provide a clean, legible report for improved record-keeping, provides improved administrative efficiency, are available in a printed or digital format (e.g., PDF format), are maintained in a cloud-based repository for future access for a predetermined duration (e.g., 10 years or more), and allow for faster invoicing, thereby improving cost tracking and managing. The data captured by the digital tickets may be customized by users so that data and information that is relevant to a job or project can be captured and reported in a meaningful format to support subject matter experts in decision-making.

The system and method of the present invention also provides for the mobile review of images and documents as well as a computer terminal for reviewing images onsite, the ability to generate custom productivity reports on any job or project based on one or more of a plurality of factors including project weld pass/fail rates, welder specific pass/fail rates, number of welds per day/spread/project, or most common failure reasons.

Digital images generated by the system and method of the present invention are accessible by remote experts, enabling real-time or near real-time review of debatable welds. Further, data may be stored in replicated from computer terminals in the field to a remote weld analytics system for archive and recall, allowing audits and reviews to be conducted with relative ease. Furthermore, with real-time or near real-time review of images, the impact caused by reshoots is minimal because any additional time for reshoots does not impact the project as the reshoots can be captured very quickly, almost instantly in some embodiments.

The system and method of the present invention also provides simple, reliable and accurate inspection services. The system and method of the present invention allows images captured in the field to be viewed on a remote computer in real-time or near real-time via a cloud-based platform. Satellite network or proprietary radio network access may be provided for sites without cellular or wired Internet connectivity. This eliminates the need to have an expert inspection auditor physically onsite, and enables remote auditing from anywhere in the world, reducing overall project costs. The reporting may track welders or welding teams, and if there are a high number of poor welds associated to one particular welder or welding team, it can be easily identified and rectified. This allows remote auditors to be leveraged to perform remote inspections for multiple welders and welding teams that are active at the same time, reducing personnel costs. This also allows rework costs (e.g., costs to repair or fix non-conforming welds) to be reduced as the auditor can view the weld images in real-time or near real-time rather than waiting until the end of day or other period. Collectively, this allows cycle time and efficiency to be improved. This also increases safety with auditors working remotely resulting in fewer personnel onsite and less rework. The system and method of the present invention also contains two image analysis processes for most or all images, adding a further layer of quality control and increasing the quality of welding and inspection process.

In accordance with a first aspect of the present invention, there is provided an image analysis system as set defined in claims 1 to 14.

In accordance with a second aspect of the present invention, there is provided a method of computer-assisted image analysis as set defined in claim 15.

The method comprises determining whether the digital image conforms to image quality specifications.

In the invention, the first determination as to determine whether the weld shown in the digital image conforms to weld specifications is only performed in response to a determination that a digital image conforms to the image quality specifications.

The method comprises generating an alert in response to a determination that the digital image does not conform to image specifications, wherein the alert is displayed on a display of the computer terminal.

In some examples of the second aspect of the present invention, the image quality specifications specify a plurality of image qualities comprising one or more of an image resolution, an exposure level, a focus level, a contrast level, and a size of the weld in the digital image.

In some examples of the second aspect of the present invention, the method further comprises: generating a digital ticket for each image that conforms to the image quality specifications, wherein the digital ticket comprises the first performance indicator and a unique ID to identify the respective image.

In some examples of the second aspect of the present invention, the digital ticket further comprises one or more of a date the image was taken, a time the image was taken, a location at which the image was taken via telemetry, a welder who made the weld, a unique customer ID, and a unique job ID.

In some examples of the second aspect of the present invention, the location is a geolocation which may include a description and/or a Global Navigation Satellite System (GNSS) coordinate such as a Global Positioning System (GPS) coordinate.

In some examples of the second aspect of the present invention, the digital ticket further comprises, in response to a determination that the weld shown in the digital image does not conform to weld specifications, one or more of a location of a flaw or defect in the weld, a type of a flaw or defect in the weld, a description of the flaw or defect, a description of the weld in machine, and a likelihood that the weld is conforming .

In some examples of the second aspect of the present invention, the digital ticket is generated in a human readable format such as Portable Document Format (PDF) and encoded with eXtensible Markup Language (XML) that can be extracted in downstream processing.

In some examples of the second aspect of the present invention, the method further comprises: generating a notification in response to a determination that the weld shown in the digital image does not conform to weld specifications.

In some examples of the second aspect of the present invention, the notification is an electronic message sent to one or more designated recipients, wherein the notification preferably includes information about the weld extracted from a weld record, and wherein the notification preferably includes a copy of the digital image of the weld and/or the corresponding digital ticket.

In some examples of the second aspect of the present invention, the method further comprises: determining a likelihood that the weld shown in the image conforms to the weld specifications.

In some examples of the second aspect of the present invention, the digital image is a real-time radiography (RTR) image, such as a high definition real-time radiography (HDRTR) image.

In some examples of the second aspect of the present invention, the imaging device is an ultrasonic imaging device and the digital image is an ultrasonic image.

In some examples of the second aspect of the present invention, the imaging device is a computed radiography device or digital radiography imaging device and the digital image is a radiographic image.

In some examples of the second aspect of the present invention, the weld analytics system has been trained by artificial intelligence (AI) or machine learning (ML).

In some examples of the second aspect of the present invention, the weld analytics system comprises an image classifier trained to classify images of welds by the type of weld and/or whether an image of a weld shows a weld conforming to weld specifications corresponding to the type of weld.

In some examples of the second aspect of the present invention, the image classifier comprises at least one neural network, such as a convolutional neural network (CNN) or other similar deep neural network.

In some examples of the second aspect of the present invention, the method further comprises: generating a new job record in the repository in response to a determination that the weld is non-conforming.

In some examples of the second aspect of the present invention, the method further comprises: generating a work order for repairing or fixing the non-conforming weld, wherein the work order preferably includes information generated from the corresponding weld record, wherein the work order includes preferably includes a technician and/or welder to perform the work, and a date on which the work is to be performed; and electronically sending the work order to one or more users.

In some examples of the second aspect of the present invention, the work order comprises at least a scheduled date on which the work is to be performed, wherein the scheduled date is based on one or more of an importance of the weld, a customer and/or job, and construction due dates and/or timelines/schedule.

In some examples of the second aspect of the present invention, the work order further comprises a technician and/or welder to perform the work, wherein the technician and/or welder is based on one or more of the welder who formed the non-conforming weld, a location of a flaw or defect in the weld, a type of flaw or defect in the weld, an importance of the weld, and a customer or project.

In examples of the present invention, there is provided a method of computer-assisted image analysis performed by a weld analytics system, comprising: receiving a digital image from an imaging device and a digital ticket, the digital ticket comprising data comprising a unique image identifier (ID) and a performance indicator representing a determination as to whether the digital image conforms to the weld specifications; storing the digital image in a repository; performing a determination as to determine whether a weld shown in the digital image conforms to weld specifications; and generating and storing a weld record in the repository in response to the second determination, wherein the weld record comprises data comprising the unique image ID and a second performance indicator representing a determination as to whether the weld shown in the digital image conforms to the weld specifications.

In examples of the present invention, there is provided a computing device comprising at least one processor, wherein the executable instructions, in response to execution by the at least one processor, cause the at least one processor to perform at least parts of the methods described herein.

In examples of the present invention, there is provided a non-transitory machine readable medium having tangibly stored thereon executable instructions for execution by at least one processor, wherein the executable instructions, in response to execution by the at least one processor, cause the at least one processor to perform at least parts of the methods described herein.

Other aspects and features of the present invention will become apparent to those of ordinary skill in the art upon review of the following description of specific implementations of the application in conjunction with the accompanying figures.

### Detailed Description of Example Embodiments

The present disclosure is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Wherever possible, the same reference numbers are used in the drawings and the following description to refer to the same elements, and prime notation is used to indicate similar elements, operations or steps in alternative embodiments. Separate boxes or illustrated separation of functional elements of illustrated systems and devices does not necessarily require physical separation of such functions, as communication between such elements may occur by way of messaging, function calls, shared memory space, and so on, without any such physical separation. As such, functions need not be implemented in physically or logically separated platforms, although they are illustrated separately for ease of explanation herein. Different devices may have different designs, such that although some devices implement some functions in fixed function hardware, other devices may implement such functions in a programmable processor with code obtained from a machine-readable medium. Lastly, elements referred to in the singular may be plural and vice versa, except where indicated otherwise either explicitly or inherently by context.

For the purpose of the present disclosure, real-time means that a computing operation or process is completed within a relatively short maximum duration, typically milliseconds or microseconds, fast enough to affect the environment in which the computing operation or process occurs, such as the inputs to a computing system.

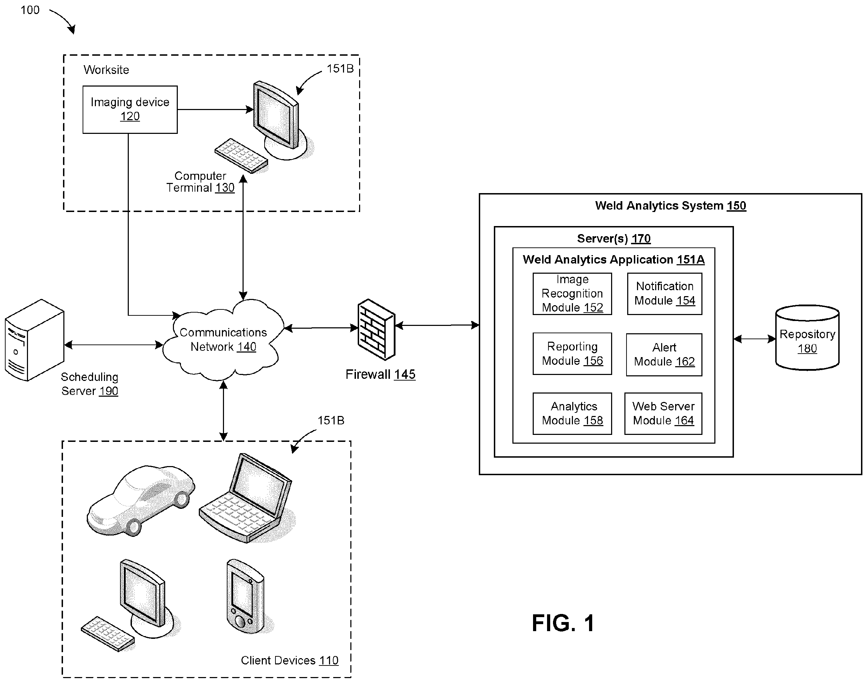

Reference is first made to FIG. 1 which shows in schematic block diagram form a communication system 100 in accordance with one example embodiment of the present invention. The communication system 100 comprises one or more imaging devices 120 (only one of which is shown in FIG. 1) located at a worksite such as a site at which a pipeline is being constructed. The imaging devices 120 are ultrasonic or radiographic image devices. Each imaging device 120 is directly connected to a computer terminal 130 via a wired or wireless communications interface. The imaging device 120 is connected to a weld analytics system 150 via a communication network 140 such as the Internet. The imaging device 120 connects directly to the communication network 140 via a communication subsystem or indirectly via the computer terminal 130 to which the imaging device 120 is directly connected.

The weld analytics system 150 may be located behind a firewall 145 or the like. The weld analytics system 150 and various endpoints such as computer terminal 130 and client devices 110 may be configured for the secure transmission of data exchanged therebetween. Communication between the weld analytics system 150 and the various endpoints may be encrypted, for example, using Advanced Encryption Standard (AES) or Triple Data Encryption Standard (Triple DES) encryption.

The weld analytics system 150 performs a number of operations on received images, described below. A plurality of client devices 110 are configured to communicate with the weld analytics system 150 via the communication network 140. The client devices 110 are configured to connect directly to the communication network 140 via a wired or wireless communications interface. The weld analytics system 150 is located geographically remote from the imaging devices 120, computer terminals 130, and client devices 110. The client devices 110 may be anywhere communication with the communication network 140 is possible, either at the worksite or at a location geographically remotely therefrom. The weld analytics system 150, computer terminals 130, and client devices 110 are configured by a weld analytics application described more fully below. The weld analytics application is a client-server application with computer terminals 130 and client devices 110 having a client-side application and the weld analytics system 150 having a server-side application. The weld analytics application may be configured to support one or more operating environments, such as the operating environments providing by Windows^{™}, iOS^{™}, MacOS^{™}, and/or Android^{™} operating systems.

The communication network 140 enables the imaging devices 120, computer terminals 130, and client devices 110 to communicate with and exchange data with the weld analytics system 150. The communication network 140 may comprise a plurality of networks of one or more network types coupled via appropriate methods known in the art including a local area network (LAN), such as a wireless local area network (WLAN) such as Wi-Fi^{™}, a wireless personal area network (WPAN), such as Bluetooth^{™} based WPAN, a wide area network (WAN), a public-switched telephone network (PSTN), or a public-land mobile network (PLMN), also referred to as a wireless wide area network (WWAN) or a cellular network.

The computer terminals 130 and client devices 110 are equipped for one or both of wired and wireless communication. The client devices 110 may be any computing device equipped for communicating over LAN, WLAN, Bluetooth, WAN, PSTN, PLMN, or any combination thereof. For example, the client devices 110 may be fixed (or desktop) personal computers or mobile wireless communication devices. The client devices 110 may communicate securely with the weld analytics system 150 using, for example, Transport Layer Security (TLS) or its predecessor Secure Sockets Layer (SSL). TLS and SSL are cryptographic protocols which provide communication security over the Internet. TLS and SSL encrypt network connections above the transport layer using symmetric cryptography for privacy and a keyed message authentication code for message reliability. Client devices 110 engaged in secure communication using TSL or SSL are provided with encryption key(s), which are typically stored in persistent memory of the respective client devices 110.

Examples of the mobile wireless communication devices include, but are not limited to, handheld wireless communication devices such as smartphones or tablets, laptop or notebook computers, netbook or ultrabook computers, vehicles having an embedded-wireless communication system, such as a Wi-Fi^{™} or cellular equipped in-dash infotainment system, or tethered to another wireless communication device having such capabilities. The mobile wireless communication devices may include devices equipped for cellular communication through PLMN or PSTN, mobile wireless communication devices equipped for Wi-Fi^{™} communication over WLAN or WAN, or dual-mode devices capable of both cellular and Wi-Fi^{™} communication. In addition to cellular and Wi-Fi^{™} communication, the mobile wireless communication devices may also be equipped for Bluetooth^{™} and/or NFC (near-field communication) communication. In various embodiments, the mobile wireless communication devices are configured to operate in compliance with any one or a combination of a number of wireless protocols, including GSM, GPRS, CDMA, EDGE, UMTS, EvDO, HSPA, 3GPP, or a variety of others. It will be appreciated that the mobile wireless communication devices may roam within and across PLMNs. In some instances, the mobile wireless communication devices are configured to facilitate roaming between PLMNs and WLANs or WANs, and are thus capable of seamlessly transferring sessions from a coupling with a cellular interface to a WLAN or WAN interface, and vice versa.

The teachings of the present disclosure are flexible and capable of being operated in various different environments without compromising any major functionality. In some embodiments, the communication system 100 includes multiple components distributed among a plurality of computing devices. For example, the weld analytics system 150 may comprise a number of functional modules that may be distributed among the computers of a multiple computer system or may be performed by a single computer in a single computer system. One or more components may be in the form of machine-executable instructions embodied in a machine-readable medium.

The imaging devices 120 may be an ultrasonic imaging device, screen-film radiography (SFR) device, a computed radiography (CR) device or digital radiography (DR) device, depending on the embodiment. When the imaging device 120 is a screen-film radiography device, a scanner (not shown) is used to provide digital images to the computer terminal 130 for sending to the weld analytics system 150. The scanner may be adapted to automatically receive x-ray films and scan x-ray films using a coupled dryer and sheet/film feeder, the details of which are outside the scope of the present invention. Whether the imaging device 120 is an ultrasonic imaging device, computed radiography device or digital radiography device, a digital image is directly or indirectly provided by the imaging device 120 to the weld analytics system 150. Ultrasonic imaging, computed radiography and digital radiography devices are advantageous over SFR devices in that such devices may be used to provide real-time or substantially real-time imaging.

The weld analytics system 150 comprises one or more servers 170 and run a weld analytics application 151A and a repository 180 comprising one or more databases that store digital images (such as ultrasonic and/or x-ray images) of welds and associated data. The repository 180 may comprise an image database, digital ticket database, weld database, and work order database. Data in the repository 180 may be segregated by customer and/or job (or project) for security data integrity, access efficiency or other reasons, or may be aggregated in one or more shared database of the same type, with data distinguishable by one or a combination of customer identifier (ID) and job ID (or project ID) or the like. The various databases of the repository 180 may be maintained separately for security, data integrity, access efficiency or other reasons, or may be maintained together.

The weld analytics application 151A is a server-side application that cooperates with a client-side weld analytics application 151B run by computer terminals 130 connected to imaging devices 120 and/or client devices 110 of users such as customers and remote users of an operator of the weld analytics system 150 such as an energy services company or other enterprise building the pipeline. The server-side weld analytics application 151A and client-side weld analytics application 151B can communicate with each other, providing client-server operations. The server-side weld analytics application 151A comprises a number of functional modules including an image recognition module 152, a notification module 154 for generating and sending electronic notifications in response to detection of a non-conforming weld by the image recognition module 152, a reporting module 156 for generating weld inspection reports based on weld data (e.g., images and metadata associated therewith such as dates of capture, location of capture, etc.) and analytical data derived from the weld data such as whether the weld is conforming or non-conforming), an analytics module 158 that analyses weld data, an alert module 162 for generating local system alerts in response to alert conditions (e.g., detection of a non-conforming weld by the image recognition module 152), and a web server module 164 for providing a web-based graphical user interface (GUI), such as a portal or dashboard, for computer terminals 130 and client devices 110 to interface with the weld analytics system 150. On the computer terminal 130 and client devices 110, the portal may be provided by a Web browser 286 or a dedicated application that provides the client-side weld analytics application 151B that interacts with the server-side weld analytics application 151A. Users may use the GUI to view data such as weld conforming and analytics generated by the weld analytics system 150, among other functions.

The image recognition module 152 is configured to analyse images to determine whether a digital image conforms to image quality specifications and to determine whether a weld shown in the digital image conforms to weld specifications such as whether the images show a weld conforming to weld specifications. The image recognition module 152 may be trained using machine learning or artificial intelligence algorithms. For example, the image recognition module 152 of the weld analytics application 151A may comprise an image classifier trained to classify images of welds by the type of weld ("weld type") and/or whether an image of a weld shows a weld conforming to weld specifications corresponding to the type of weld. The image classifier may comprise at least one neural network, such as a convolutional neural network (CNN) or other similar deep neural network. The training of the image recognition module 152 is outside the scope of the present application. The image classifier may be trained to determine one or more of a location of a flaw or defect in the weld, a type of flaw or defect in the weld, and a likelihood that the weld is conforming (e.g., the certainty of the weld assessment). The image classifier may be trained to output one or more of a description of the flaw or defect including a location of a flaw or defect in the weld and type of flaw or defect in machine in a human readable format, a description of the weld in machine in a human readable format including a type of weld, and the likelihood that the weld is conforming. The image classifier may be trained using supervised learning that uses pre-classified images of various types of welds, and images of conforming and non-conforming images for each type as a ground touch. The pre-classified images may be classified by licensed professionals, such as certified welders and weld auditors.

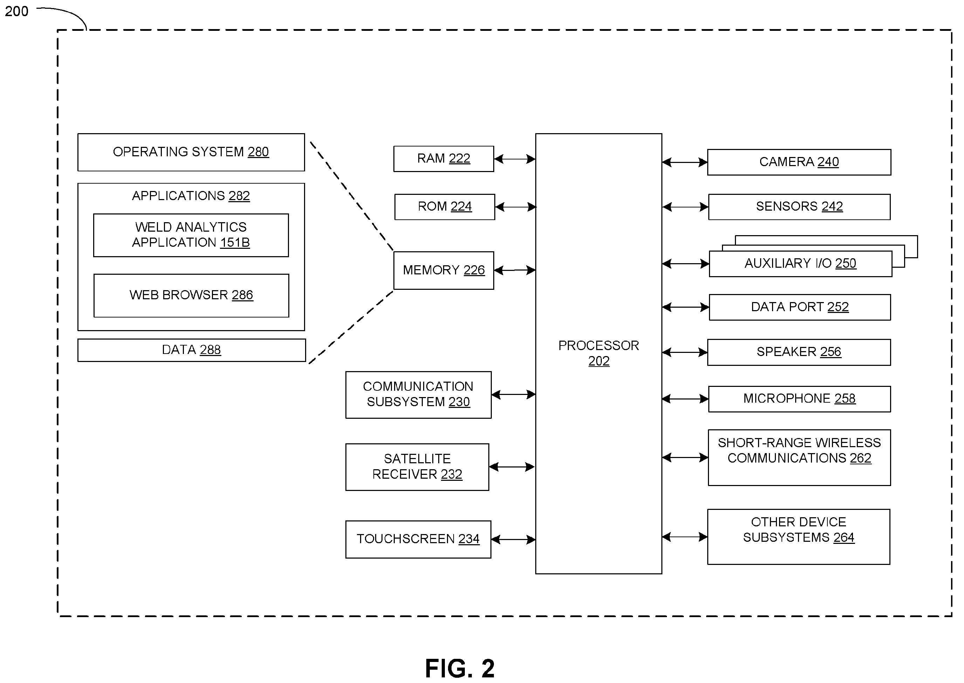

Reference is next made to FIG. 2 which illustrates in simplified block diagram form an example computing device 200 suitable for use as a client device 110 or computer terminal 130 in the communication system 100. The computing device 200 includes a processor system comprising at least one processor 202 (such as a microprocessor) which controls the overall operation of the computing device 200. The processor 202 is coupled to a plurality of components via a communication bus (not shown) which provides a communication path between the components and the processor 202.

The processor 202 is coupled to Random Access Memory (RAM) 222, Read Only Memory (ROM) 224, persistent (non-volatile) memory 226 such as flash memory, a communication subsystem 230 for wired and/or wireless communication, for example, via a communication network 140 such as the Internet, a satellite receiver 232 for receiving satellite signals from a satellite network (not shown) that comprises a plurality of satellites which are part of a global or regional satellite navigation system, and a touchscreen 234. The touchscreen 234 comprises a display such as a color liquid crystal display (LCD), light-emitting diode (LED) display or active-matrix organic light-emitting diode (AMOLED) display, with a touch-sensitive input surface or overlay connected to an electronic controller. A GUI of the computing device 200 is rendered and displayed on the touchscreen 234 by the processor 202. A user may interact with the GUI using the touchscreen 134 and optionally other input devices (e.g., buttons, dials) to display relevant information. The GUI may comprise a series of traversable content specific menus.

The computing device 200 also comprises a camera 240, sensors 242, auxiliary input/output (I/O) subsystems 250, data port 252 such as serial data port (e.g., Universal Serial Bus (USB) data port), speaker 256, microphone 258, a short-range communication subsystem 262, and other device subsystems 264. The computing device 200 may also comprise additional input devices such as buttons, switches, dials, a keyboard or keypad, or navigation tool, depending on the type of computing device 200, and other additional devices such as a vibrator or LED notification light, depending on the type of computing device 200.

The short-range communication subsystem 262 enables communication between the computing device 200 and other proximate systems or devices, which need not necessarily be similar devices. The short-range communication subsystem 262 may also include devices, associated circuits and components for providing other types of short-range wireless communication such as Bluetooth^{™}, near field communication (NFC), IEEE 802.15.3a (also referred to as UltraWideband (UWB)), Z-Wave, ZigBee, ANT/ANT+ or infrared (e.g., Infrared Data Association (IrDA) communication).

Operating system software 282 executed by the processor 202 is stored in the persistent memory 226 but may be stored in other types of memory devices, such as ROM 224 or similar storage element. A number of applications 282 executed by the processor 202 are also stored in the persistent memory 226. The applications 282 include the client-side weld analytics application 151B. The features of the client-side weld analytics application 151B may vary depending on whether the computing device 200 is a computer terminal which receives images from an imaging device 120 or a client device 110 which merely uses the portal to interface with the weld analytics system 150. The client-side weld analytics application 151B may include an image processing module, image analytics module, object recognition module, and ticketing module in some examples. The client-side weld analytics application 151B, in response to execution by the processor 202, allow the computing device 200 to communicate with the weld analytics system 150 in accordance with the methods described herein. The client-side weld analytics application 151B may also provide a portal or dashboard for viewing analytical data and information of the weld analytics system 150.

The memory 226 stores a variety of data 288. The data 288 may comprise sensor data sensed by the sensors 242, user data comprising user preferences, settings and optionally personal media files (e.g., music, videos, directions, etc.), a download cache comprising data downloaded via the communication subsystem 230, and saved files. System software, software modules, specific device applications, or parts thereof, may be temporarily loaded into a volatile store, such as RAM 222, which is used for storing runtime data variables and other types of data or information. Communication signals received by the computing device 200 may also be stored in RAM 222. Although specific functions are described for various types of memory, this is merely one example, and a different assignment of functions to types of memory may be used in other embodiments.

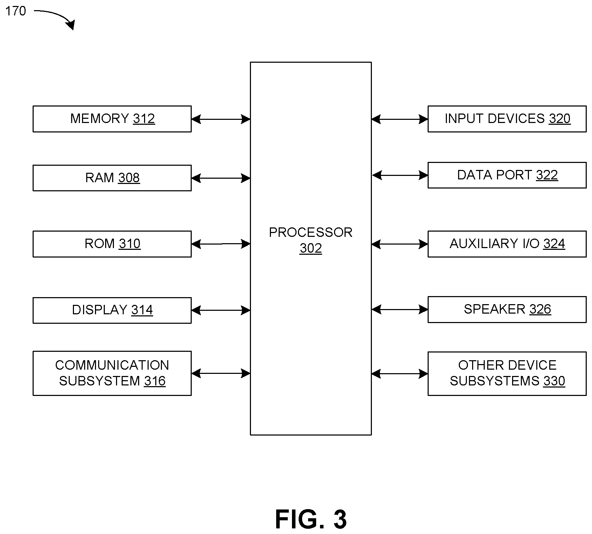

Reference is next made to FIG. 3 which illustrates in simplified block diagram form an example server 170 in accordance with the present invention. The server 170 includes a processor system comprising at least one processor 302 (such as a microprocessor) which controls the overall operation of the server 170. The processor 302 is coupled to a plurality of components via a communication bus (not shown) which provides a communication path between the components and the processor 302.

The server 170 comprises RAM 308, ROM 310, a persistent memory 312 which may be flash memory or other suitable form of memory, and a communication subsystem 316 for wired and/or wireless communication. The server 170 may also comprise a display 314, a speaker 326, one or more input device(s) 320, a data port 322 such as a serial data port, auxiliary input/outputs (I/O) 324, and other devices subsystems 330. The input device(s) 320 may include a touchscreen, a keyboard or keypad, one or more buttons, one or more switches, a touchpad, a rocker switch, a thumbwheel, a microphone or other type of input device.

Operating system software executed by the processor 302 is stored in the persistent memory 312 but may be stored in other types of memory devices, such as ROM 310 or similar storage element. The persistent memory 312 includes installed applications and user data, such as saved files, among other data. The processor 302, in addition to its operating system functions, enables execution of software applications on the server 170.

### Computer-assisted method of performing image analysis of welds

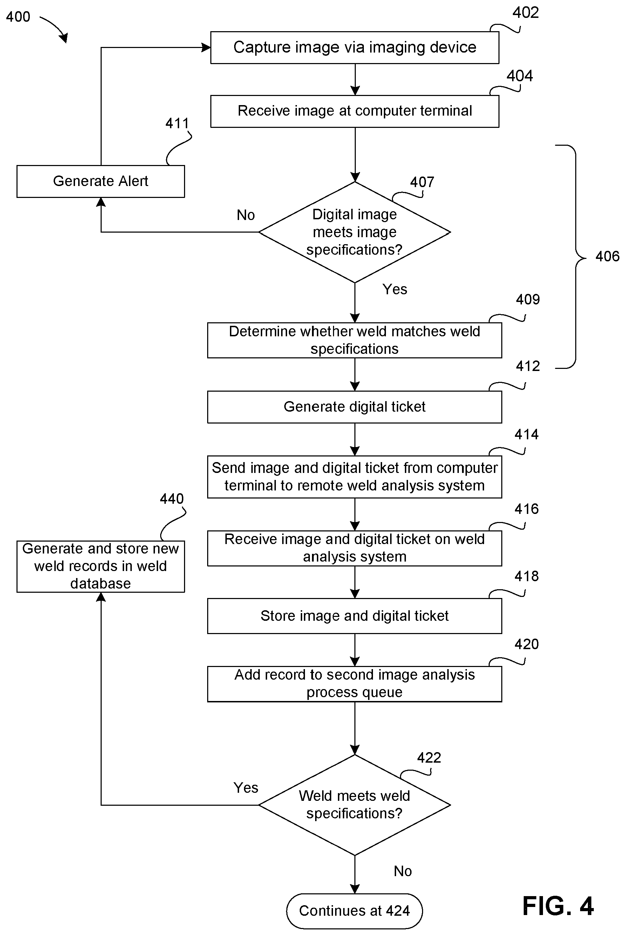

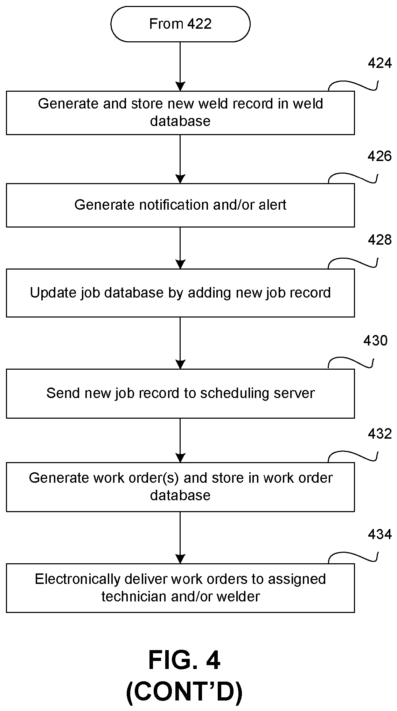

FIG. 4 is a flowchart of an example computer-assisted method 400 of performing image analysis of a weld in accordance with an example embodiment of the present invention. The method 400 is performed at least in part by a processor system.

At step 402, one or more images showing a weld are captured by an imaging device 120 at a worksite. The worksite may be a construction site, for example, at which a pipeline is being constructed. The imaging device 120 is typically an ultrasonic imaging device, CR device or DR device. However, the imaging device could be a SFR device in some embodiments.

At step 404, a computer terminal 130 running the client-side weld analytics application 151B at the worksite receives the one or more images from the imaging device 120. The images are digital images. The computer terminal 130 may receive the images automatically, without user intervention, depending on the type of imaging device 120 and communication capabilities between the computer terminal 130 and the imaging device 120. For example, the computer terminal 130 may automatically download the images from the imaging device 120 and stored the images in a memory 226 of the computer terminal 130. The images may be received by the computer terminal 130 either individually or in batch. Alternatively, the images may be input into the client-side weld analytics application 151B on the computer terminal 130 by a user, for example, when the imaging device 120 is an SFR device.

Image data may be generated or acquired by the imaging device 120 or the computer terminal 130, or input by a user of the respective device. The image data may be included in metadata encoded in the respective image. Alternatively, the image data may be stored separately and sent along with the image by the imaging device 120 to the computer terminal 130. Telemetry data concerning the location at which the image was captured may be provided by the imaging device 120, the computer terminal 130 or a separate telemetry system. The telemetry data may be included in the image data, for example, in the metadata encoded in the respective image. The image data, may also include a type of weld, which may be included in the metadata encoded in the respective image. The type of weld may be input by a user at the time the image was generated or acquired by the imaging device, or may be determined automatically by the imaging device 120 or the computer terminal 130 using image recognition techniques.

At step 406, a first image analysis process is performed on each of the images for a respective weld on the computer terminal 130. The first image analysis process is a multistage (e.g., two stage) image analysis. In a first stage, at step 407, each received image is analysed to determine whether the image conforms to image quality specifications. The image quality specifications specify a plurality of image qualities such as one or more of an image resolution, an exposure level, focus level, a contrast, and a size of the weld in image, among other possibilities.

In response to a determination that a digital image conforms to the image quality specifications, a second stage of the multistage image analysis is performed. In the second stage, at step 409, a first determination as to determine whether a weld shown in the digital image conforms to weld specifications is performed. The weld in the digital image is analyzed based on a number of different parameters to determine whether the weld in the image conforms to the weld specifications. The weld specifications are based on a type of the weld, such as girth weld or seam weld, among other factors. As noted above, the type of weld may be determined in advance and encoded in metadata encoded in the digital image. The weld specifications may be based on standards/codes set by one or more of the American Petroleum Institute (API), American Society of Mechanical Engineers (ASME) or American Society for Nondestructive Testing (ASNT), among other possibilities.

In response to a determination that a digital image does not conform to the image quality specifications, at step 411, an alert is generated for the non-conforming image and the second stage of the multistage image analysis is not performed - the computer terminal 130 refrains from performing the first determination as to determine whether the weld shown in the digital image conforms to weld specifications. An alert is a local notification displayed on a display 314 of the computer terminal 130 for a user of the computer terminal 130. With real-time imaging, the weld may be then re-imaged using the imaging device 120 while the imaging device 120 is still setup for imaging the respective weld. This allows faster re-shooting and less down time.

The first image analysis process outputs a first performance indicator based on the results of the first image analysis for each image that conforms to the image quality specifications. If the image is determined to conform to the image quality specifications and the weld in the image is determined to conform to the weld specifications, the first image analysis process outputs the first performance indicator with a corresponding value such as "weld acceptable", "weld conforming" or "weld passes weld specifications". If the image is determined to conform to the image quality specifications but the weld in the image is determined not to conform to the weld specifications, the first image analysis process outputs the first performance indicator with a corresponding value such as "weld unacceptable", "weld non-conforming" or "weld fails to conform to weld specifications". The first image analysis process may also output one or more of a description of the flaw or defect including a location of a flaw or defect in the weld and type of flaw or defect in machine in a human readable format, a description of the weld in machine in a human readable format including a type of weld, and the likelihood that the weld is conforming (e.g., the certainty of the weld assessment), typically expressed as a percentage. The description of the weld may, for example, assist in a second image analysis process (e.g., for example, a description such as "porosity exists but the weld is in code" may assist a human auditor by letting the auditor know that the inspector identified something in the image but classified it as in code). This additional information is encoded in the digital ticket or provided along with the digital ticket and images.

The first image analysis process may be performed automatically by the client-side weld analytics application 151B without user intervention or by a user, depending on customer and/or regulatory requirements. When computer-implemented, the first image analysis may be human supervised by a licensed professional, for example, to comply with local laws, regulations, or standards/codes. The client-side weld analytics application 151B may be trained using machine learning or artificial intelligence algorithms, depending on the embodiment. For example, the client-side weld analytics application 151B may comprise an image classifier similar to that described above.

In some embodiments, the first image analysis process may be completely automated and only engage a user when the likelihood that the weld is conforming is below a likelihood threshold. The likelihood is output by an image recognition module of the client-side weld analytics application 151B, for example, by an image classifier thereof. The likelihood threshold may be set, for example, by a customer, operator of the system 150, regulations, or learned.

At step 412, a digital ticket (e.g., "weld ticket") is generated by the client-side weld analytics application 151B on the computer terminal 130 for each image that conforms to the image quality specifications. The digital ticket is an object generated by the client-side weld analytics application 151B. In some examples, the digital ticket is generated in a human readable format such as Portable Document Format (PDF) and encoded with eXtensible Markup Language (XML), an equivalent markup language or the like so that data may be easily read by users and extracted by downstream software processes, such as those of the weld analytics system 150.

The digital ticket includes the first performance indicator output at the end of the first image analysis process as well as other data/information about the image including a unique ID to identify the image such as a serialized image number representing the number of images generated by the respective imaging device 120 which captured the image, a date the image was taken, a time the image was taken, a location at which the image was taken via telemetry (e.g., a geolocation, which may include a description and/or a Global Navigation Satellite System (GNSS) coordinate such as Global Positioning System (GPS) coordinate), a welder who made the weld, a unique customer ID, and a unique job ID (or project ID), among other possible data. A common choice of coordinates is latitude, longitude and optionally elevation. For example, in response to GNSS being used to determine the geolocation, the geolocation may be defined in terms of latitude and longitude, the values of which may be specified in one of a number of different formats including degrees minutes seconds (DMS), degrees decimal minutes (DDM), or decimal degrees (DD).

At step 414, the images and digital ticket are sent from the computer terminal 130 to the weld analytics system 150 via the communication network 140, either by a wired or wireless communication link. The wireless communication link may be provided by cellular, satellite or proprietary radio network transceiver connected to a cellular, satellite or proprietary radio access network, depending on the communications capabilities of the site. The images and digital ticket may be sent individually either after the respective image is processed when the images are received individually or images and digital ticket may be sent in batch after each respective image is processed when the images are received in batch.

At step 416, the images and digital ticket sent by the computer terminal 130 are received by the weld analytics system 150, which processes the images and digital ticket. At step 414, the images and digital ticket are automatically stored in the repository 180. The images may be serialized based on a globally unique ID that uniquely identifies the image within the repository 180 of the weld analytics system 150, for example, based on project and weld information. The images and digital ticket may be stored in separate databases and linked by linking information such as, for example, a unique ID.

The images and digital ticket may be sent by the computer terminal 130 to the weld analytics system 150 and stored thereon as part of the cloud-based storage replication software application such as a Zedi Cloud SCADA solution. The images and digital ticket may be replicated on the weld analytics system 150 using a cloud-based storage replication software application. This allows the images and digital ticket to be replicated on the weld analytics system 150 in real-time or near real-time. The images and digital ticket are thereafter secured stored by the weld analytics system 150 via the firewall 145 or the like.

At step 420, the weld analytics system 150 processes the digital ticket and adds a record (or entry) to a second image analysis process queue for each of the received images. The weld analytics system 150 interprets and extracts data and/or information about the images from the corresponding digital ticket. This step and the use of a queue is optional and may be omitted in other embodiments.

At step 422, a second image analysis process is performed on each of the images in the second image analysis process queue on the weld analytics system 150 similar to the second stage of the first image analysis process. A second determination as to determine whether a weld shown in the digital image conforms to weld specifications is performed. The weld in the digital image is analyzed based on a number of different parameters to determine whether the weld in the image conforms to the weld specifications. The second image analysis process may be performed automatically by the server-side weld analytics application 151A without user intervention or by a user, depending on customer and/or regulatory requirements. When computer-implemented, the second image analysis may be human supervised by a licensed professional, for example, to comply with local laws, regulations, or standards/codes such as those set by one or more of the API, ASME or ASNT, among other possibilities. As noted above, the image recognition module 152 of the server-side weld analytics application 151A may be trained using machine learning or artificial intelligence algorithms.

The second image analysis process outputs a second performance indicator representing a determination as to whether the weld shown in the digital image conforms to the weld specifications based on the results of the second image analysis similar to the first image analysis. If the image is determined to conform to the image quality specifications and the weld in the image is determined to conform to the weld specifications, the first image analysis process outputs the first performance indicator with a corresponding value such as "weld acceptable", "weld conforming" or "weld passes weld specifications". If the image is determined to conform to the image quality specifications but the weld in the image is determined not to conform to the weld specifications, the first image analysis process outputs the first performance indicator with a corresponding value such as "weld unacceptable", "weld non-conforming" or "weld fails to conform to weld specifications". If the image is determined to conform to the image quality specifications and the weld in the image is determined to conform to the weld specifications, the second image analysis process outputs the second performance indicator with a corresponding value such as "weld acceptable", "weld conforming" or "weld passes weld specifications". If the image is determined to conform to the image quality specifications but the weld in the image is determined not to conform to the weld specifications, the second image analysis process outputs the second performance indicator with a corresponding value such as "weld unacceptable", "weld non-conforming" or "weld fails to conform to weld specifications". The second image analysis process may also output one or more of a description of the flaw or defect including a location of a flaw or defect in the weld and type of flaw or defect in machine in a human readable format, a description of the weld in machine in a human readable format including a type of weld, and the likelihood that the weld is conforming. This information may assist in fixing or repairing a weld determined to be non-conforming.

In some embodiments, the second image analysis process may be completely automated and only engage a user when the likelihood that the weld is conforming is below a likelihood threshold and/or the second performance indicator output by the second image analysis process is different than the first performance indicator of the first image analysis process. The likelihood is output by an image recognition module of the client-side weld analytics application 151B, for example, by an image classifier thereof. The likelihood threshold may be set, for example, by a customer, operator of the system 150, regulations, or learned.

It is contemplated that the first and second image analysis processes are different. There are several different configurations contemplated, each providing a different balance of completion time, cost and quality control. In a first configuration, the first image analysis process is performed by an inspector or technician in the field (e.g., onsite) and the second image analysis process is performed remotely by an auditor, with the inspector or technician having lesser qualifications that the auditor. In a second configuration, the first image analysis process is performed automatically by the client-side weld analytics application 151B on the computer terminal 130 in the field and the second image analysis process is performed remotely by an auditor. In a third configuration similar to the second configuration, the first image analysis process is performed automatically by the client-side weld analytics application 151B on the computer terminal 130 but an inspector or technician in the field is engaged when the calculated likelihood that the weld is conforming determined by the first image analysis process is below a likelihood threshold. The second image analysis process is performed remotely by an auditor, i.e. a remote auditor. In other configurations, the first image analysis process is performed as described in any of the configurations above and the second image analysis process is performed automatically by the server-side weld analytics application 151A on the weld analytics system 150. In such other configurations, a remote auditor is engaged when a calculated likelihood that the weld is conforming based on the second image analysis process is below a likelihood threshold and/or the second performance indicator output by the second image analysis process is different than the first image analysis process.

In other embodiments, the second image analysis process is only performed in response to a determination that the calculated likelihood that the weld is conforming determined by the first image analysis process is below a likelihood threshold.

In response to a determination as to whether the weld shown in the digital image conforms to the weld specifications, at step 440, the weld analytics system 150 generates and stores a new weld record in the repository 180 indicating that the weld shown in the digital image conforms to the weld specifications. The new weld record includes the second performance indicator output by the second image analysis. The weld record may be stored in a weld database separate and apart from the databases in which the images and digital ticket are stored and linked by linking information such as, for example, a unique ID (e.g., by one or a combination of a globally unique image ID, customer ID or job ID (or project ID)). Each weld record may have a unique weld ID. The weld record comprises data comprising the unique image ID and the first performance indicator and/or the second performance indicator associated with the weld shown in the digital image among other data such as the date the image was taken, the time the image was taken, the location at which the image was taken, the welder who made the weld, customer ID, job ID (or project ID), and weld ID, among other possible data.

In response to a determination as to whether the weld shown in the digital image does not conform to the weld specifications, operations continue to step 424 at which the weld analytics system 150 generates and stores a new weld record in the repository 180 indicating that the weld shown in the digital image conforms to the weld specifications.

At step 426, a notification and alert is generated in response to a determination that the weld shown in the digital image does not conform to weld specifications. A notification and alert is generated in response to a determination that the weld is non-conforming. A notification is an electronic message, such as an email, text message or instant message (which may be sent via secure, proprietary/enterprise instant messaging system), sent from the weld analytics system 150 to a corresponding messaging address of one or more designated recipients. The designated recipients may include one or more of a technician and/or welder in the field, a customer of an energy service company constructing the pipeline, a regulator, or an administrator of an energy service company constructing the pipeline. The addresses of the recipients may be determined by the weld analytics system 150 via an enterprise address book or similar database.

The notification may include information about the weld extracted from the weld record and possibly a copy of the image of the weld and/or the corresponding digital ticket. The recipients of the notification may view the notification on a client device 110, such as a smartphone, tablet, laptop computer or other wireless communication device. An alert is a local notification displayed on a display 314 of the weld analytics system 150 for a user of the weld analytics system 150. A notification may be automatically sent in response to a determination that a weld is non-conforming based on settings to the weld analytics system 150, which may be based on customer settings or preferences.

In other embodiments, a notification and/or alert is generated at the end of the second image analysis process to provide one or more users with a notification of the result of the second image analysis process irrespective of the actual result of the second image analysis process.

At step 428, the weld analytics system 150 generates and stores a new job record in the repository 180 for the non-conforming weld. The job record may be stored in a job database separate and apart from the other databases and linked by linking information such as, for example, a unique ID (e.g., by one or a combination of a globally unique image ID, customer ID, job ID or weld ID). The job record includes information about the respective non-conforming weld extracted from the corresponding weld record.

At step 430, the weld analytics system 150 sends the new job records to a scheduling server 190 that manages and schedules welding operations. At step 432, the scheduling server 190 generates work orders for repairing or fixing the non-conforming weld, typically automatically without user intervention, based on weld information and construction (or project) information. The work orders include information generated from the corresponding weld record so that the respective weld can be precisely and relatively quickly located with relative ease. The work orders may be assigned to a technician and/or welder to perform the work, a date on which the work is to be performed, among other parameters. For example, a different and/or more senior technician and/or welder may be assigned having knowledge about the welder who formed the non-conforming weld, a location of a flaw or defect in the weld, a type of flaw or defect in the weld, an importance of the weld, and a customer or project, among other possible factors. The scheduled date of the work may be similarly based on an importance of the weld, a customer and/or job, and construction due dates and/or timelines/schedule, among other possible factors. The scheduling server 190 may be trained using machine learning or artificial intelligence algorithms. For example, the scheduling server 190 may comprise a deep neural network trained to optimize scheduling of job orders based on the importance of the weld, a customer and/or job, and construction due dates and/or timelines/schedules, among other possible factors. The training of the scheduling server 190 is outside the scope of the present application. Although shown as a separate server in the shown embodiment, the scheduling server 190 may be a module of the weld analytics system 150 in other embodiments. The work orders are stored in a work order database. The work orders may be stored in a calendar or scheduling system.

At step 434, individual work orders may be sent electronically to users, such as a technician and/or welder assigned to perform/complete the work order, by electronic mail, text message or instant message (which may be sent via a secure, proprietary/enterprise instant messaging system). The addresses of the users to which the work order is sent being determined by the scheduling server 190 via an enterprise address book or similar database.

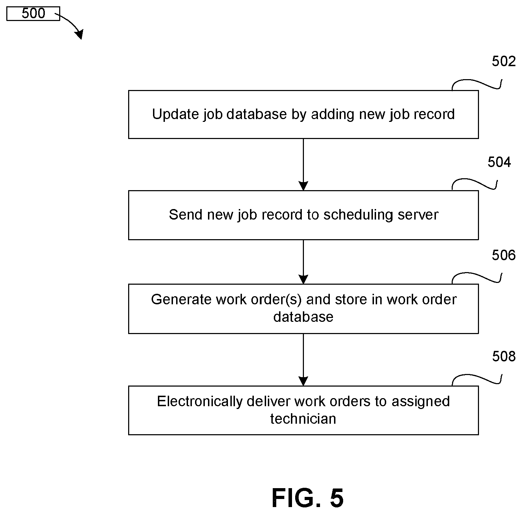

In the above-method, it is contemplated that real-time imaging may be used to image the welds. FIG. 5 is a flowchart of a computer-assisted workflow 500 for generating job orders for non-conforming images in accordance with an example embodiment of the present invention that may be useful when real-time imaging of the welds is not available. The workflow 500 occurs after generation of the alert in step 411, or instead of, generating the alert in step 411.

At step 502, the weld analytics system 150 generates and stores a new job record in the repository 180 to re-image the weld with the non-conforming image, similar to step 428 above.

At step 504, the weld analytics system 150 sends the new job records to the scheduling server 190. At step 506, the scheduling server 190 generates work orders for re-imaging the weld with the non-conforming image, typically automatically without user intervention, based on weld information and construction (or project) information, similar to step 432 above.

At step 508, individual work orders may be sent electronically to users, such as a technician and/or welder assigned to re-image the weld, by electronic mail, text message or instant message (which may be sent via a secure, proprietary/enterprise instant messaging system). The addresses of the users to which the work order is sent being determined by the scheduling server 190 via an enterprise address book or similar database.

It will be appreciated that one or both of the first image analysis performed by the client-side weld analytics application 151B and the second image analysis performed by the server-side analytics application 151A may be automated and optionally performed using machine learning or artificial intelligence algorithms depending on local laws, regulations, or standards/codes, which may require a licensed professional, in which case the image analysis cannot be performed using automation and/or machine learning or artificial intelligence algorithms. When automation and/or using machine learning or artificial intelligence algorithms are permitted, the first determination as to determine whether a weld shown in the digital image conforms to weld specifications that is performed by the client-side analytics application 151B in the second stage of the first image analysis is performed within a first tolerance higher than a second tolerance to which the second determination of the second image analysis is performed. The first determination may apply fewer or less rigorous/thorough/comprehensive parameters than the second determination performed by the image recognition module 152 of the server-side analytics application 151A, thereby allowing a thinner client to be used the computer terminals 130 and client devices 110. In this way, the first determination provides a faster and simpler "quick check" of the weld. The second determination may apply greater or more rigorous/thorough/comprehensive parameters than the first determination. In this way, the second determination provides a more detailed and thorough check of the weld, taking into account the additional computing power and resources of the server(s) 170 relative to the computer terminals 130 and client devices 110 in the field. Alternatively, in other embodiments the second stage of the first image analysis may be omitted such that a determination as to determine whether a weld shown in the digital image conforms to weld specifications that is only performed by the image recognition module 152 of the server-side analytics application 151A, with the first image analysis being limited to an image quality analysis.

Furthermore, although the present invention has been described in the context of weld inspection and analyzing images of weld images, the teachings of the present invention can be applied to analyzing procedural images taken prior to weld images.

The steps and/or operations in the flowcharts and drawings described herein are for purposes of example only. There may be many variations to these steps and/or operations without departing from the teachings of the present invention. For instance, the steps may be performed in a differing order, or steps may be added, deleted, or modified.

The coding of software for carrying out the above-described methods described is within the scope of a person of ordinary skill in the art having regard to the present invention. Machine readable code executable by one or more processors of one or more respective devices to perform the above-described method may be stored in a machine-readable medium such as the memory of the data manager. The terms "software" and "firmware" are interchangeable within the present invention and comprise any computer program stored in memory for execution by a processor, comprising RAM memory, ROM memory, erasable programmable ROM (EPROM) memory, electrically EPROM (EEPROM) memory, and non-volatile RAM (NVRAM) memory. The above memory types are example only, and are thus not limiting as to the types of memory usable for storage of a computer program.

## Claims

1. An image analysis system (100), comprising:
a computer terminal (130) and an imaging device (120) connected to the computer terminal; and
a weld analytics system (200) located remotely from the computer terminal (130) and imaging device (129);
wherein the weld analytics system (200) and computer terminal (130) are configured to exchange data with each other over a communication network (140);
wherein the computer terminal (130) comprises a processor (202) configured to:
receive a digital image (404);
determine whether the digital image conforms to image quality specifications (407);
in response to a determination that the digital image conforms to image quality specifications:
perform a first determination as to determine whether a weld shown in the digital image conforms to weld specifications (409);
generate a digital ticket in response to the first determination, the digital ticket comprising data comprising a unique image identifier (ID) and a first performance indicator representing a determination as to whether the weld shown in the digital image conforms to the weld specifications (412); and
send the digital image and the digital ticket to the weld analytics system (414);
in response to a determination that the digital image does not conform to image quality specifications, generate an alert that the digital image is a non-conforming image (411) and refrain from performing the first determination as to determine whether the weld shown in the digital image conforms to weld specifications;
wherein the weld analytics system (200) comprises a repository (180) and a server (170), the server comprising a processor (302) configured to:
in response to a determination by the processor of the computer terminal that the digital image conforms to the image quality specifications:
receive the digital image and the digital ticket (416);
store the digital image in the repository (418);
perform a second determination as to determine whether the weld shown in the digital image conforms to weld specifications (422); and
generate and store a weld record in the repository in response to the second determination, wherein the weld record comprises data comprising the unique image ID and the first performance indicator and/or a second performance indicator representing a determination as to whether the weld shown in the digital image conforms to the weld specifications (440).

2. The image analysis system of claim 1, wherein the alert generated by the processor of the computer terminal in response to a determination that the digital image does not conform to image specifications is displayed on a display (234) of the computer terminal (130).

3. The image analysis system of claim 1 or claim 2, wherein the image quality specifications specify a plurality of image qualities comprising one or more of an image resolution, an exposure level, a focus level, a contrast level, and a size of the weld in the digital image.

4. The image analysis system of any one of claims 1 to 3, wherein the processor (302) of the weld analytics system (200) is further configured to generate a digital ticket for each image that conforms to the image quality specifications, wherein the digital ticket comprises the first performance indicator and a unique ID to identify the respective image.

5. The image analysis system of claim 4, wherein the digital ticket further comprises one or more of a date the image was taken, a time the image was taken, a location at which the image was taken via telemetry, a welder who made the weld, a unique customer ID, and a unique job ID, wherein the location is a geolocation comprising a description and/or a Global Navigation Satellite System (GNSS) coordinate.

6. The image analysis system of any one of claims 4 to 5, wherein the digital ticket further comprises, in response to a determination that the weld shown in the digital image does not conform to weld specifications, one or more of a location of a flaw or defect in the weld, a type of a flaw or defect in the weld, a description of the flaw or defect, a description of the weld in machine, and a calculated likelihood that the weld is conforming.

7. The image analysis system of any one of claims 4 to 6, wherein the digital ticket is generated in Portable Document Format (PDF) and encoded with eXtensible Markup Language (XML) that can be extracted in downstream processing.

8. The image analysis system of any one of claims 1 to 7, wherein the processor (302) of the weld analytics system (200) is further configured to:
generate a notification in response to a determination that the weld shown in the digital image does not conform to weld specifications (426), wherein the notification is an electronic message sent to one or more designated recipients, wherein the notification includes information about the weld extracted from a weld record, and wherein the notification includes a copy of the digital image of the weld and/or the corresponding digital ticket.

9. The image analysis system of any one of claims 1 to 8, wherein the processor (202) of the computer terminal (130) is further configured to:
calculate a likelihood that the weld shown in the image conforms to the weld specifications.

10. The image analysis system of any one of claims 1 to 9, wherein:
the imaging device (120) is an ultrasonic imaging device and the digital image is an ultrasonic image; or
the imaging device (120) is a computed radiography device or digital radiography imaging device and the digital image is a radiographic image, wherein the radiographic image is a real-time radiography (RTR) image or a high definition real-time radiography (HDRTR) image.

11. The image analysis system of any one of claims 1 to 10, wherein the weld analytics system (200) has been trained by artificial intelligence (AI) or machine learning (ML).

12. The image analysis system of claim 11, wherein the weld analytics system (200) comprises an image classifier trained to classify images of welds by the type of weld and/or whether an image of a weld shows a weld conforming to weld specifications corresponding to the type of weld.

13. The image analysis system of any one of claims 1 to 12, wherein the processor (302) of the weld analytics system (200) is further configured to:
generate a work order for repairing or fixing the non-conforming weld (432), wherein the work order includes information generated from the corresponding weld record; and
electronically send the work order to one or more users (434).

14. The image analysis system of any one of claims 1 to 13, wherein:
the work order comprises at least a scheduled date on which the work is to be performed, wherein the scheduled date is based on one or more of an importance of the weld, a customer and/or job, and construction due dates and/or timelines/schedule; and/or
the work order comprises a technician and/or welder to perform the work, wherein the technician and/or welder is based on one or more of the welder who formed the non-conforming weld, a location of a flaw or defect in the weld, a type of flaw or defect in the weld, an importance of the weld, and a customer or project.

15. A method of computer-assisted image analysis, comprising:
receiving, at a computer terminal (130), a digital image from an imaging device (120) (404);
determining whether the digital image conforms to image quality specifications (407);
in response to a determination that the digital image conforms to image quality specifications:
performing a first determination as to determine whether a weld shown in the digital image conforms to weld specifications (409);
generating a digital ticket in response to the first determination, the digital ticket comprising data comprising a unique image identifier (ID) and a performance indicator representing a determination as to whether the digital image conforms to the weld specifications (412);
sending from the computer terminal (130) to a weld analytics system (200) the digital image and the digital ticket (414);
receiving by the weld analytics system the digital image and the digital ticket (416);
storing by the weld analytics system the digital image in the repository (418);
performing by the weld analytics system a second determination as to determine whether a weld shown in the digital image conforms to weld specifications (422); and
generating and storing a weld record in the repository in response to the second determination, wherein the weld record comprises data comprising the unique image ID and the first performance indicator and/or a second performance indicator representing a determination as to whether the weld shown in the digital image conforms to the weld specifications (440); and
in response to a determination that the digital image does not conform to image quality specifications, generate an alert that the digital image is a non-conforming image (411) and refrain from performing the first determination as to determine whether the weld shown in the digital image conforms to weld.

## Patentansprüche

1. Bildanalysesystem (100), das umfasst:
ein Computerendgerät (130) und eine Bildgebungsvorrichtung (120), die mit dem Computerendgerät verbunden ist; und
ein Schweißanalysesystem (200), das entfernt von dem Computerendgerät (130) und der Bildgebungsvorrichtung (129) angeordnet ist;
wobei das Schweißanalysesystem (200) und das Computerendgerät (130) dazu ausgelegt sind, Daten über ein Kommunikationsnetzwerk (140) miteinander auszutauschen;
wobei das Computerendgerät (130) einen Prozessor (202) umfasst, der ausgelegt ist zum:
Empfangen eines digitalen Bilds (404);
Bestimmen, ob das digitale Bild Bildqualitätsspezifikationen entspricht (407);
als Reaktion auf eine Bestimmung, dass das digitale Bild Bildqualitätsspezifikationen entspricht:
Durchführen einer ersten Bestimmung, um zu bestimmen, ob eine im digitalen Bild gezeigte Schweißnaht Schweißnahtspezifikationen entspricht (409);
Erzeugen eines digitalen Tickets als Reaktion auf die erste Bestimmung, wobei das digitale Ticket Daten umfasst, die eine eindeutige Bildkennung (ID) und einen ersten Leistungsindikator, der eine Bestimmung repräsentiert, ob die im digitalen Bild gezeigte Schweißnaht den Schweißnahtspezifikationen entspricht, umfassen (412); und
Senden des digitalen Bilds und des digitalen Tickets an das Schweißanalysesystem (414);
als Reaktion auf eine Bestimmung, dass das digitale Bild Bildqualitätsspezifikationen nicht entspricht, Erzeugen einer Warnung, dass das digitale Bild ein nicht konformes Bild ist (411), und Nichtdurchführen der ersten Bestimmung, um zu bestimmen, ob die im digitalen Bild gezeigte Schweißnaht Schweißnahtspezifikationen entspricht;
wobei das Schweißanalysesystem (200) ein Repository (180) und einen Server (170) umfasst, wobei der Server einen Prozessor (302) umfasst, der ausgelegt ist zum:
als Reaktion auf eine Bestimmung, durch den Prozessor des Computerendgeräts, dass das digitale Bild den Bildqualitätsspezifikationen entspricht:
Empfangen des digitalen Bilds und des digitalen Tickets (416);
Speichern des digitalen Bilds im Repository (418);
Durchführen einer zweiten Bestimmung, um zu bestimmen, ob die im digitalen Bild gezeigte Schweißnaht Schweißnahtspezifikationen entspricht (422); und
Erzeugen und Speichern eines Schweißdatensatzes im Repository als Reaktion auf die zweite Bestimmung, wobei der Schweißdatensatz Daten umfasst, die die eindeutige Bild-ID und den ersten Leistungsindikator und/oder einen zweiten Leistungsindikator, der eine Bestimmung repräsentiert, ob die im digitalen Bild gezeigte Schweißnaht den Schweißnahtspezifikationen entspricht, umfassen (440).

2. Bildanalysesystem nach Anspruch 1, wobei die Warnung, die durch den Prozessor des Computerendgeräts als Reaktion auf eine Bestimmung, dass das digitale Bild Bildspezifikationen nicht entspricht, erzeugt wird, auf einer Anzeige (234) des Computerendgeräts (130) angezeigt wird.

3. Bildanalysesystem nach Anspruch 1 oder Anspruch 2, wobei die Bildqualitätsspezifikationen eine Vielzahl von Bildqualitäten spezifizieren, die eines oder mehrere von einer Bildauflösung, einem Belichtungsgrad, einem Fokusgrad, einem Kontrastgrad und einer Größe der Schweißnaht im digitalen Bild umfassen.

4. Bildanalysesystem nach einem der Ansprüche 1 bis 3, wobei der Prozessor (302) des Schweißanalysesystems (200) ferner dazu ausgelegt ist, ein digitales Ticket für jedes Bild zu erzeugen, das den Bildqualitätsspezifikationen entspricht, wobei das digitale Ticket den ersten Leistungsindikator und eine eindeutige ID zum Identifizieren des jeweiligen Bilds umfasst.

5. Bildanalysesystem nach Anspruch 4, wobei das digitale Ticket ferner eines oder mehrere von einem Datum, an dem das Bild aufgenommen wurde, einem Zeitpunkt, an dem das Bild aufgenommen wurde, einem Ort, an dem das Bild über Telemetrie aufgenommen wurde, einem Schweißer, der die Schweißnaht hergestellt hat, einer eindeutigen Kunden-ID und einer eindeutigen Job-ID umfasst, wobei der Ort eine Geolokation ist, die eine Beschreibung und/oder eine Koordinate eines globalen Navigationssatellitensystems (GNSS-Koordinate) umfasst.

6. Bildanalysesystem nach einem der Ansprüche 4 bis 5, wobei das digitale Ticket ferner als Reaktion auf eine Bestimmung, dass die im digitalen Bild gezeigte Schweißnaht Schweißnahtspezifikationen nicht entspricht, eines oder mehrere von einem Ort eines Fehlers oder Defekts in der Schweißnaht, einer Art eines Fehlers oder Defekts in der Schweißnaht, einer Beschreibung des Fehlers oder Defekts, einer Beschreibung der Schweißnaht in der Maschine und einer berechneten Wahrscheinlichkeit, dass die Schweißnaht konform ist, umfasst.

7. Bildanalysesystem nach einem der Ansprüche 4 bis 6, wobei das digitale Ticket in Portable Document Format (PDF) erzeugt und mit eXtensible Markup Language (XML) codiert wird, die beim Downstream-Verarbeiten extrahiert werden kann.

8. Bildanalysesystem nach einem der Ansprüche 1 bis 7, wobei der Prozessor (302) des Schweißanalysesystems (200) ferner ausgelegt ist zum:
Erzeugen einer Benachrichtigung als Reaktion auf eine Bestimmung, dass die im digitalen Bild gezeigte Schweißnaht Schweißnahtspezifikationen nicht entspricht (426), wobei die Benachrichtigung eine elektronische Nachricht ist, die an einen oder mehrere designierte(n) Empfänger gesendet wird, wobei die Benachrichtigung Informationen über die Schweißnaht einschließt, die aus einem Schweißdatensatz extrahiert wurden, und wobei die Benachrichtigung eine Kopie des digitalen Bilds der Schweißnaht und/oder des entsprechenden digitalen Tickets einschließt.

9. Bildanalysesystem nach einem der Ansprüche 1 bis 8, wobei der Prozessor (202) des Computerendgeräts (130) ferner ausgelegt ist zum:
Berechnen der Wahrscheinlichkeit, dass die im Bild gezeigte Schweißnaht den Schweißnahtspezifikationen entspricht.

10. Bildanalysesystem nach einem der Ansprüche 1 bis 9, wobei:
die Bildgebungsvorrichtung (120) eine Ultraschallbildgebungsvorrichtung ist und das digitale Bild ein Ultraschallbild ist oder
die Bildgebungsvorrichtung (120) eine Computerradiographievorrichtung oder eine digitale Radiographiebildgebungsvorrichtung ist und das digitale Bild ein Radiographiebild ist, wobei das Radiographiebild ein Echtzeitradiographiebild (RTR-Bild) oder ein Bild einer Echtzeitradiographie in hoher Auflösung (HDRTR-Bild) ist.

11. Bildanalysesystem nach einem der Ansprüche 1 bis 10, wobei das Schweißanalysesystem (200) durch künstliche Intelligenz (KI) oder maschinelles Lernen (ML) trainiert wurde.

12. Bildanalysesystem nach Anspruch 11, wobei das Schweißanalysesystem (200) einen Bildklassifizierer umfasst, der trainiert ist, um Bilder von Schweißnähten nach der Art der Schweißnaht und/oder danach, ob ein Bild einer Schweißnaht eine Schweißnaht zeigt, die Schweißnahtspezifikationen entspricht, die der Art der Schweißnaht entsprechen, zu klassifizieren.

13. Bildanalysesystem nach einem der Ansprüche 1 bis 12, wobei der Prozessor (302) des Schweißanalysesystems (200) ferner ausgelegt ist zum:
Erzeugen eines Arbeitsauftrags zum Reparieren oder Nachbessern der nicht konformen Schweißnaht (432), wobei der Arbeitsauftrag Informationen einschließt, die aus dem entsprechenden Schweißdatensatz erzeugt werden; und
elektronischen Senden des Arbeitsauftrags an einen oder mehrere Benutzer (434).

14. Bildanalysesystem nach einem der Ansprüche 1 bis 13, wobei:
der Arbeitsauftrag mindestens ein geplantes Datum umfasst, an dem die Arbeit durchgeführt werden soll, wobei das geplante Datum auf einem oder mehreren von einer Wichtigkeit der Schweißnaht, einem Kunden und/oder einem Job und Konstruktionsfälligkeitsdaten und/oder Zeitleisten/einem Zeitplan basiert; und/oder
der Arbeitsauftrag einen Techniker und/oder Schweißer umfasst, der die Arbeit durchführen soll, wobei der Techniker und/oder Schweißer auf einem oder mehreren von dem Schweißer, der die nicht konforme Schweißnaht gebildet hat, einem Ort eines Fehlers oder Defekts in der Schweißnaht, einer Art von Fehler oder Defekt in der Schweißnaht, einer Wichtigkeit der Schweißnaht und einem Kunden oder Projekt basiert.

15. Verfahren zur computergestützten Bildanalyse, das umfasst:
Empfangen, an einem Computerendgerät (130), eines digitalen Bilds von einer Bildgebungsvorrichtung (120) (404);
Bestimmen, ob das digitale Bild Bildqualitätsspezifikationen entspricht (407);
als Reaktion auf eine Bestimmung, dass das digitale Bild Bildqualitätsspezifikationen entspricht:
Durchführen einer ersten Bestimmung, um zu bestimmen, ob eine im digitalen Bild gezeigte Schweißnaht Schweißnahtspezifikationen entspricht (409);
Erzeugen eines digitalen Tickets als Reaktion auf die erste Bestimmung, wobei das digitale Ticket Daten umfasst, die eine eindeutige Bildkennung (ID) und einen Leistungsindikator, der eine Bestimmung repräsentiert, ob das digitale Bild den Schweißnahtspezifikationen entspricht, umfassen (412);
Senden, von dem Computerendgerät (130) an ein Schweißanalysesystem (200), des digitalen Bilds und des digitalen Tickets (414);
Empfangen, durch das Schweißanalysesystem, des digitalen Bilds und des digitalen Tickets (416);
Speichern, durch das Schweißanalysesystem, des digitalen Bilds in dem Repository (418);
Durchführen, durch das Schweißanalysesystem, einer zweiten Bestimmung, um zu bestimmen, ob eine im digitalen Bild gezeigte Schweißnaht Schweißnahtspezifikationen entspricht (422); und
Erzeugen und Speichern eines Schweißdatensatzes im Repository als Reaktion auf die zweite Bestimmung, wobei der Schweißdatensatz Daten umfasst, die die eindeutige Bild-ID und den ersten Leistungsindikator und/oder einen zweiten Leistungsindikator, der eine Bestimmung repräsentiert, ob die im digitalen Bild gezeigte Schweißnaht den Schweißnahtspezifikationen entspricht, umfassen (440); und
als Reaktion auf eine Bestimmung, dass das digitale Bild Bildqualitätsspezifikationen nicht entspricht, Erzeugen einer Warnung, dass das digitale Bild ein nicht konformes Bild ist (411), und Nichtdurchführen der ersten Bestimmung, um zu bestimmen, ob die im digitalen Bild gezeigte Schweißnaht einer Schweißnaht entspricht.

## Revendications

1. Système d'analyse d'images (100), comprenant :
un terminal informatique (130) et un dispositif d'imagerie (120) connectés au terminal informatique ; et
un système d'analyse de soudure (200) situé à distance du terminal informatique (130) et du dispositif d'imagerie (129) ;
dans lequel le système d'analyse de soudure (200) et le terminal informatique (130) sont configurés pour échanger des données l'un avec l'autre sur un réseau de communication (140) ;
dans lequel le terminal informatique (130) comprend un processeur (202) configuré pour ;
recevoir une image numérique (404) ;
déterminer si l'image numérique est conforme aux spécifications de qualité d'image (407) ;
en réponse à une détermination que l'image numérique est conforme aux spécifications de qualité d'image :
effectuer une première détermination afin de déterminer si une soudure montrée dans l'image numérique est conforme aux spécifications de soudure (409) ;
générer un ticket numérique en réponse à la première détermination, le ticket numérique comprenant des données comprenant un identificateur d'image unique (ID) et un premier indicateur de performance représentant une détermination pour savoir si la soudure montrée dans l'image numérique est conforme aux spécifications de soudure (412) ; et
envoyer l'image numérique et le ticket numérique au système d'analyse de soudure (414) ;
en réponse à la détermination que l'image numérique n'est pas conforme aux spécifications de qualité d'image, générer une alerte indiquant que l'image numérique est une image non conforme (411) et s'abstenir d'effectuer la première détermination afin de déterminer si la soudure montrée dans l'image numérique est conforme aux spécifications de soudure ;
dans lequel le système d'analyse de soudure (200) comprend un dépôt (180) et un serveur (170), le serveur comprenant un processeur (302) configuré pour :
en réponse à une détermination par le processeur du terminal informatique que l'image numérique est conforme aux spécifications de qualité d'image :
recevoir l'image numérique et le ticket numérique (416) ;
stocker l'image numérique dans le dépôt (418) ;
effectuer une seconde détermination pour déterminer si la soudure montrée dans l'image numérique est conforme aux spécifications de soudure (422) ; et
générer et stocker un enregistrement de soudure dans le dépôt en réponse à la seconde détermination, l'enregistrement de soudure comprenant des données comprenant l'ID d'image unique et le premier indicateur de performance et/ou un second indicateur de performance représentant une détermination pour savoir si la soudure montrée dans l'image numérique est conforme aux spécifications de soudure (440).

2. Système d'analyse d'images selon la revendication 1, dans lequel l'alerte générée par le processeur du terminal informatique en réponse à une détermination que l'image numérique n'est pas conforme aux spécifications d'image est affichée sur un affichage (234) du terminal informatique (130).

3. Système d'analyse d'images selon la revendication 1 ou la revendication 2, dans lequel les spécifications de qualité d'image spécifient une pluralité de qualités d'image comprenant un ou plusieurs éléments parmi une résolution d'image, un niveau d'exposition, un niveau de focalisation, un niveau de contraste et une taille de la soudure dans l'image numérique.

4. Système d'analyse d'images selon l'une quelconque des revendications 1 à 3, dans lequel le processeur (302) du système d'analyse de soudure (200) est en outre configuré pour générer un ticket numérique pour chaque image qui est conforme aux spécifications de qualité d'image, le ticket numérique comprenant le premier indicateur de performance et un ID unique pour identifier l'image respective.

5. Système d'analyse d'images selon la revendication 4, dans lequel le ticket numérique comprend en outre un ou plusieurs éléments parmi une date à laquelle l'image a été prise, une heure à laquelle l'image a été prise, un emplacement auquel l'image a été prise par télémétrie, un soudeur qui a effectué la soudure, un ID de client unique et un ID de travail unique, l'emplacement étant une géolocalisation comprenant une description et/ou une coordonnée GNSS (système mondial de navigation par satellite).

6. Système d'analyse d'images selon l'une quelconque des revendications 4 à 5, dans lequel le ticket numérique comprend en outre, en réponse à une détermination que la soudure montrée dans l'image numérique n'est pas conforme aux spécifications de soudure, un ou plusieurs éléments parmi un emplacement d'une imperfection ou d'un défaut dans la soudure, un type d'imperfection ou de défaut dans la soudure, une description de l'imperfection ou du défaut, une description de la soudure dans la machine, et une probabilité calculée que la soudure soit conforme.

7. Système d'analyse d'images selon l'une quelconque des revendications 4 à 6, dans lequel le ticket numérique est généré en format de document portable (PDF) et codé avec un langage de balisage extensible (XML) qui peut être extrait dans un traitement en aval.

8. Système d'analyse d'images selon l'une quelconque des revendications 1 à 7, dans lequel le processeur (302) du système d'analyse de soudure (200) est en outre configuré pour :
générer une notification en réponse à une détermination que la soudure montrée dans l'image numérique n'est pas conforme aux spécifications de soudure (426), la notification étant un message électronique envoyé à un ou plusieurs destinataires désignés, la notification comprenant des informations sur la soudure extraites d'un enregistrement de soudure, et la notification comprenant une copie de l'image numérique de la soudure et/ou du ticket numérique correspondant.

9. Système d'analyse d'images selon l'une quelconque des revendications 1 à 8, dans lequel le processeur (202) du terminal informatique (130) est en outre configuré pour :
calculer la probabilité que la soudure montrée dans l'image soit conforme aux spécifications de soudure.

10. Système d'analyse d'images selon l'une quelconque des revendications 1 à 9, dans lequel :
le dispositif d'imagerie (120) est un dispositif d'imagerie ultrasonore et l'image numérique est une image ultrasonore ; ou
le dispositif d'imagerie (120) est un dispositif de radiographie informatisé ou un dispositif d'imagerie radiographique numérique et l'image numérique est une image radiographique, l'image radiographique étant une image radiographique en temps réel (RTR) ou une image radiographique en temps réel haute définition (HDRTR).

11. Système d'analyse d'images selon l'une quelconque des revendications 1 à 10, dans lequel le système d'analyse de soudure (200) a été entraîné par l'intelligence artificielle (IA) ou l'apprentissage automatique (ML).

12. Système d'analyse d'images selon la revendication 11, dans lequel le système d'analyse de soudure (200) comprend un classificateur d'image entraîné pour classifier des images de soudures par le type de soudure et/ou si une image d'une soudure présente une soudure conforme aux spécifications de soudure correspondant au type de soudure.

13. Système d'analyse d'images selon l'une quelconque des revendications 1 à 12, dans lequel le processeur (302) du système d'analyse de soudure (200) est en outre configuré pour :
générer un ordre de travail pour réparer ou fixer la soudure non conforme (432), l'ordre de travail comprenant des informations générées à partir de l'enregistrement de soudure correspondant ; et
envoyer électroniquement l'ordre de travail à un ou plusieurs utilisateurs (434).

14. Système d'analyse d'images selon l'une quelconque des revendications 1 à 13, dans lequel :
l'ordre de travail comprend au moins une date planifiée à laquelle le travail doit être exécuté, la date planifiée étant basée sur un ou plusieurs éléments parmi l'importance de la soudure, d'un client et/ou d'un travail, et des dates d'échéance de construction et/ou des échéanciers/horaires ; et/ou
l'ordre de travail comprend un technicien et/ou un soudeur pour effectuer le travail, le technicien et/ou le soudeur étant basés sur un ou plusieurs éléments parmi le soudeur qui a formé la soudure non conforme, un emplacement d'une imperfection ou d'un défaut dans la soudure, un type d'imperfection ou de défaut dans la soudure, une importance de la soudure et un client ou un projet.

15. Procédé d'analyse d'images assistée par ordinateur, comprenant :
la réception, sur un terminal informatique (130), d'une image numérique provenant d'un dispositif d'imagerie (120) (404) ;
la détermination pour savoir si l'image numérique est conforme à des spécifications de qualité d'image (407) ;
en réponse à une détermination que l'image numérique est conforme aux spécifications de qualité d'image :
la réalisation d'une première détermination afin de déterminer si une soudure montrée dans l'image numérique est conforme aux spécifications de soudure (409) ;
la génération d'un ticket numérique en réponse à la première détermination, le ticket numérique comprenant des données comprenant un identifiant d'image unique (ID) et un indicateur de performance représentant une détermination pour savoir si l'image numérique est conforme aux spécifications de soudure (412) ;
l'envoi à partir du terminal informatique (130) à un système d'analyse de soudure (200), de l'image numérique et du ticket numérique (414) ;
la réception, par le système d'analyse de soudure, de l'image numérique et du ticket numérique (416) ;
le stockage, par le système d'analyse de soudure, de l'image numérique dans le dépôt (418) ;
la réalisation, par le système d'analyse de soudure, d'une seconde détermination afin de déterminer si une soudure montrée dans l'image numérique est conforme aux spécifications de soudure (422) ; et
la génération et le stockage d'un enregistrement de soudure dans le dépôt en réponse à la seconde détermination, l'enregistrement de soudure comprenant des données comprenant l'ID d'image unique et le premier indicateur de performance et/ou un second indicateur de performance représentant une détermination pour savoir si la soudure montrée dans l'image numérique est conforme aux spécifications de soudure (440) ; et
en réponse à une détermination que l'image numérique n'est pas conforme aux spécifications de qualité d'image, générer une alerte indiquant que l'image numérique est une image non conforme (411) et s'abstenir d'effectuer la première détermination afin de déterminer si la soudure montrée dans l'image numérique est conforme à la soudure.
